# EUROPÄISCHE PATENTANMELDUNG

(11) **EP 0 587 929 A1**
(43) Veröffentlichungstag der Anmeldung: **23.03.1994**
(21) Anmeldenummer: 92115779.8
(22) Anmeldetag: 16.09.1992
(51) Int. Cl.: B65G 59/06, B65G 57/30

(54) **Palettenmagazin**

(71) Anmelder: Brendecke, Hans-Henning, D-31171 Nordstemmen (DE)
(72) Erfinder: Brendecke, Hans-Henning, D-31171 Nordstemmen (DE)

(57) **Zusammenfassung**

Mit diesem Gerät werden Paletten einem errichtbaren Stapel von unten oder oben entnommen oder zugefügt. Das Gerät besteht aus einem dreiseitigen Rahmen [1], in dem ein zweiter Rahmen [2] durch zwei Hydraulikzylinder [3] vertikal verschoben wird. An dem Rahmen [2] befinden sich unten vier Profile [4], die beim Befüllvorgang bereits in unterster Position in die Palette eingreifen und den Stapel soweit heben (begrenzt durch den Hub der Zylinder [3]), daß Paletten unten eingeschoben werden können. Zum Entnehmen wird der Rahmen [2] mit eingezogenen Profilen [4] bis zu der Position der untersten zu verbleibenen Palette hochgefahren, dort drehen die Profile in diese Palette ein und heben den Stapel weiter an. Die gewünschte Zahl von Paletten liegt frei und kann entnommen werden. Ein Senkvorgang des Rahmens [2] mit dem verbleibenen Stapel in die unterste Position beendet den Ablauf.

## Beschreibung

1. Zweck: Die Erfindung bezieht sich auf ein Gerät zur Handhabung von Paletten. Dabei werden Paletten einem errichtbaren Stapel von unten oder oben entnommen oder zugefügt.

2. Derzeitiger Stand der Technik: Es besteht ein eigenes deutsches Gebrauchsmuster (Nr. G92 02 980.9 v. 30.04.92). Weitere vergleichbare Lösungen sind nicht bekannt.

Bisher müssen Paletten, sofern ein Gabelstapler oder ein ähnliches Gerät nicht zur Verfügung steht beziehungsweise aus anderen Gründen der Einsatz nicht möglich oder zweckmäßig ist, einzeln von Hand einem Stapel oben hinzugefügt oder entnommen werden. Diese Arbeit ist anstrengend und bei höheren Stapel gefährlich.

3. Darstellung: Im folgenden wird die Erfindung anhand einer zusammenfassenden Zeichnung erläutert:
Das Gerät besteht aus einem dreiseitigen Rahmen [1], in dem ein zweiter Rahmen [2] durch zwei Hydraulikzylinder [3] vertikal verschoben wird. An dem Rahmen [2] befinden sich unten vier Profile [4], die beim Befüllvorgang bereits in unterster Position in die Palette eingreifen und den Stapel soweit heben (begrenzt durch den Hub der Zylinder [3]), daß Paletten unten eingeschoben werden können. Zum Entnehmen wird der Rahmen [2] mit eingezogenen Profilen [4] bis zu der Position der untersten zu verbleibenen Palette hochgefahren, dort drehen die Profile in diese Palette ein und heben den Stapel weiter an. Die gewünschte Zahl von Paletten liegt frei und kann entnommen werden. Ein Senkvorgang des Rahmens [2] mit dem verbleibenen Stapel in die unterste Position beendet den Ablauf.

Die durch die Erfindung erreichten Vorteile sind im wesentlichen darin zu sehen, daß
- nicht nur ein, sondern mehrere Paletten gleichzeitig entnommem oder eingefüllt werden können,
- der Umgang mit Paletten wesentlich erleichtert und die Gefährdung der mit Paletten umgehenden Menschen deutlich verringert wird.

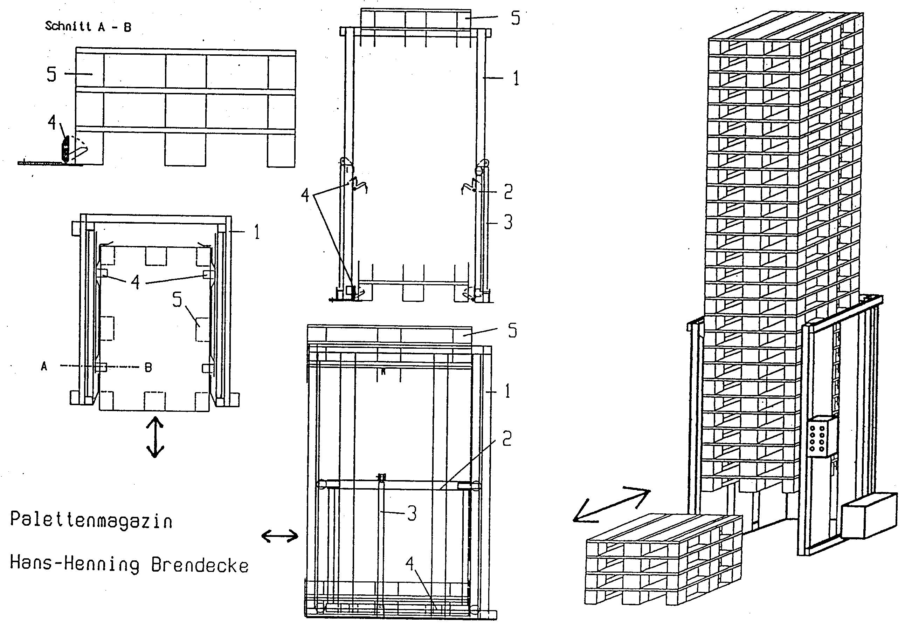

## Patentansprüche

1. Palettenmagazin zum Stapeln und Entstapeln von Paletten,
dadurch gekennzeichnet, daß ein Rahmen [2] innnerhalb eines Rahmens [1] vertikal verfährt.

2. Palettenmagazin nach Anspruch 1, dadurch gekennzeichnet,
daß an dem verfahrenen Rahmen [2] unten zwei der mehr Profile [4] horizontal oder vertikal drehbar angeordnet sind.

3. Palettenmagazin nach Anspruch 1, dadurch gekennzeichnet, daß an dem verfahrenen Rahmen [2] unten zwei der mehr Profile [4] verschiebbar angeordnet sind.

4. Palettenmagazin nach Anspruch 1, 2 und 3, dadurch gekennzeichnet, daß die Profile [4] in der Höhe bestimmbaren Positionen drehen oder schieben.

5. Palettenmagazin nach Anspruch 1, dadurch gekennzeichnet, daß der verfahrene Rahmen [2] außerhalb des Rahmens [1] vertikal verfährt.

## Geänderte Patentansprüche

### Geänderte Patentansprüche gemäss Regel 86(2) EPÜ.

1. Palettenmagazin zum Stapeln und Entstapeln von Paletten, dadurch gekennzeichnet, daß ein Rahmen (2) innnerhalb eines Rahmens (1) vertikal verfährt. An dem verfahrbaren Rahmen (2) sind unten zwei der mehr Profile (4) horizontal oder vertikal drehbar angeordnet. Die Profile (4) werden durch Magnete (6) aus den Paletten heraus- oder in die Paletten hineingedreht.

2. Palettenmagazin nach Anspruch 1, dadurch gekennzeichnet, daß die Profile (4) durch Federn (7) in die Paletten hineingedreht oder gezogen werden.

3. Palettenmagazin nach Anspruch 1, dadurch gekennzeichnet, daß der Raum unter dem angehobenen Palettenstapel (5) durch Lichtschranken (8) zur Steuerung überwacht wird.
